# EUROPEAN PATENT APPLICATION

(11) **EP 2 143 984 A1**
(43) Date of publication of application: **13.01.2010**
(21) Application number: 08159932.6
(22) Date of filing: 08.07.2008
(51) Int. Cl.: F16L 11/08, F16L 11/22

(54) **Reinforced flexible hose**

(71) Applicant: Eaton Fluid Power GmbH, 76532 Baden-Baden (DE)
(72) Inventor: Scherer, Eric, 76470 Oetigheim (DE); Wilczek, Frank, 30559 Hannover (DE); Schmidt, Jürgen, 76437 Rastatt (DE)
(74) Representative: Rüger, Barthelt & Abel Patentanwälte

(57) **Abstract**

A flexible hose (1,1',10) which is in particular suited for hydraulic applications comprises at least one compound layer (2) encircling at least one channel (3,3a,3b). The compound layer consists of a matrix (4) of elastic material and fibres (5) irregularly oriented and embedded therein. No external braiding is necessary for reinforcing the hose to make sure that it withstands high pressures and radial forces.

## Description

This invention relates to a reinforced flexible hose used in high pressure fluid transport applications and to a method for manufacturing those flexible hoses. In particular, the invention relates to a hose comprising a short fibre reinforcement.

In high pressure applications such as hoses used in hydraulic systems it is desirable for the hose to be of minimum weight, maximum flexibility, low costs of production and yet still be capable of withstanding very high internal working pressures and a large number of pressure surge and relaxation cycles. For meeting this demands US patent no. 4,585,035 discloses a braided hose comprising an elastomeric tube, a braided spiral sleeve surrounding said elastomeric tube and having a first braid member and a second braid member under equal tension. The first braid being composed of at least one strand of wire helically wound about said elastomeric tube. The second braid member is composed of a plurality of relatively flexible filaments being wound oppositely of the first braid member and interwoven with the first braid member so that the second braid member is crimped at each point of contact with the first braid while the first braid remains uncrimped at each point of contact.

While this specific design may work it obviously requires a very specific method of manufacture which may contribute to the costs. Moreover, the braid members may move relative to each other if the hose is flexing. This may contribute to wear and delamination.

Therefore it is one object of the present invention to provide a reliable flexible hose which is easy to manufacture.

The inventive flexible hose comprises at least one compound layer encircling at least one channel and forming a tube member. The compound layer tube consists of a matrix of elastic material and fibres irregularly oriented and embedded therein rather than relying on a conventional braiding. The compound layer of the inventive hose replaces any braiding. If designed correctly no supplemental reinforcement is necessary. The compound layer tube is both tube member and reinforcement in one element.

While the fibres are oriented irregularly they extend mainly in at least one of the circumferential and the axial direction. In the preferred embodiment fibres with all directions within the layers are present in the same number. In other words, while some fibres are oriented axially some other fibres are oriented diagonally while still some other fibres are oriented in the circumferential direction. Some fibres may be entangled one with another while others may extend more or less straight within the elastomeric matrix.

Preferably, the fibres are totally embedded within the matrix of elastomeric material. In particular, they do neither cross nor intersect any surface and any interface between the compound layer and any other layer if any. Moreover, the fibres do not peak out of the elastomeric material, in particular, if the compound layer forms the enclosure of the channel.

The inventive flexible hose comprises at least one single channel. However it is envisaged, if necessary, to provide more than one channel within the flexible hose and encircled by the compound layer. In other words, the compound layer may form a double, triple, or multiple channel tube. The inventive concept forms a basis for manufacturing reinforced multi-channel hoses in a very simple way.

A very simple embodiment of the inventive flexible hose comprises merely the compound layer with the at least one channel formed therein. However, it may be useful to provide protective layers at the inner circumference or around the outer circumference or at both sides as well. The inner end or outer protective layer may be firmly bonded to the compound layer. Alternatively, the at least one protective layer may be provided without material to material bond and just be placed within the at least one channel or around the outer surface.

The protective layer(s) may consist of the same elastic material as the matrix of the compound layer. Alternatively, the layer(s) may consist of different materials having different chemical, physical, and/or mechanical features.

The elastic material of the matrix may be selected from a wide range of materials. Preferably, the elastomeric material is a nitrile butadiene rubber (NBR). Nitrile butadiene rubber is a family of unsaturated copolymers of 2-propene-nitrile and various butadiene monomers (1,2-butadiene and 1,3-butadiene). This type of synthetic rubber is generally resistant to fuel, oil, and other chemicals. It withstands a range of temperatures from -40°C to +120°C. It may be coated at its inner or outer circumference with chloroprene (2-chloro-1,3-butadiene) as a protective layer.

The fibres embedded within the elastic matrix preferably consist of one of the following materials: glass, carbon, ceramic, metal, in particular steel, aramide, polyamide or polyester or a combination thereof.

The manufacture of the fibre involves the extruding of the mixture of uncured matrix material with the fibres dispersed therein for forming the hose structure and curing the mixture of uncured matrix material and the fibres for forming the elastic matrix of the compound layer. The strength of the flexible hose and the maximum pressure the hose can withstand can easily be controlled by defining a proper thickness of the layer. No braiding process is necessary for manufacturing the hose. This is in particular useful if the hose has a predefined curvature. The extruded hose can be formed to a variety of shapes. They may be straight, curved, double curved, e.g. s-shaped or the like.

It appears that the inventive hose is very easy to be manufacture while being superior in its mechanical properties.

Further features of the invention will become apparent by studying the following description of embodiments of the invention when taken together with the drawings and/or claims:
Fig. 1 is a perspective view of an inventive hose showing the preferred embodiment of the invention with a part broken away for clarity;
Fig. 2 is a front view of an alternative embodiment of the invention;
Fig. 3 is a front view of another embodiment of the invention; and
Fig. 4 is a development of the wall of the hollow cylindrical compound layer tube.

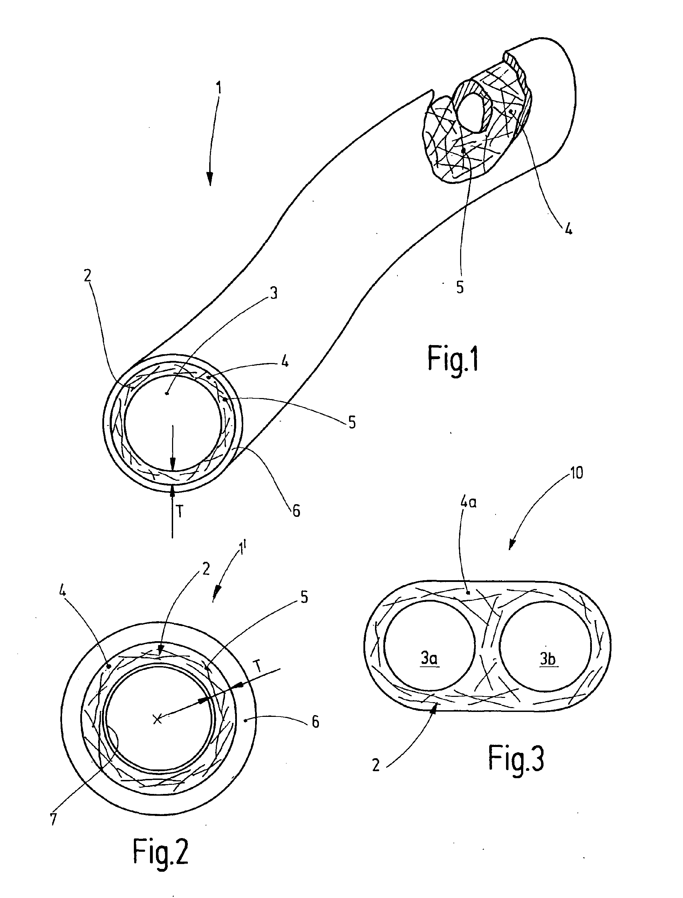

Referring to figure 1 the flexible hose 1 comprises an elastomeric tube 2 of a compound material suitable for conveying or containing the fluid to be transported. Any suitable rubber or thermoplastic elastomer known to be useful in hose application may be used for the tube 2. The material may include rubber polymers such as nitrile butadiene rubber (NBR), polychloroprene, chlorinated polyethylene, acrylonitrile-butadiene, polybutadiene rubber, ethylene-propylene-diene terpolymers, chlorinated polyethylene and natural rubber polymers. Representative thermoplastic elastomers include propylene modified with ethylene-propylene rubber such as Santoprene, block polymers, polyvinylchloride, etc. These elastomers may be compounded with other fillers, plasticizers, antioxidants, cure systems and the like to achieve particular properties required for specific applications. The cure systems may include sulphur, peroxides and the like.

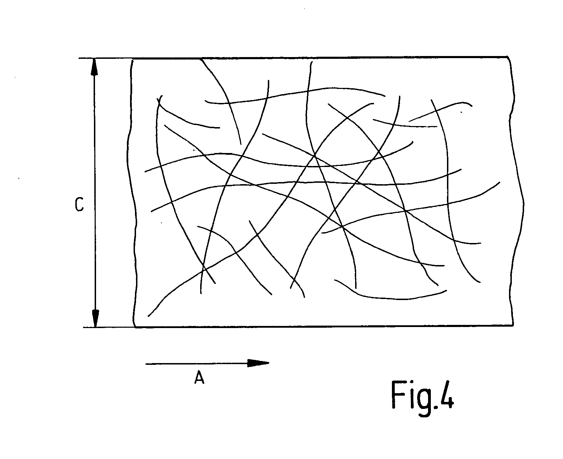

The elastomeric tube 2 encircles at least one duct or channel 3 which extends along the entire length of the flexible hose 1. The wall of the tube 2 is formed by a compound layer comprising an elastomeric matrix consisting of one of the previously mentioned elastomeric materials. The compound layer has a circular or a non-circular cross-section and preferably a constant wall thickness T to be measured in radial direction. Embedded in the matrix 4 are fibres 5 which extend mainly in axial and circumferential directions as seen in figure 1. Additionally reference is made to figure 4 which illustrates the development of the tube 2 in plan view. The fibres 5 may have uniform length selected within a range from some millimetres to some centimetres. It is possible as well to use fibres with different length expected to be around some centimetres and varying from some millimetres to some centimetres.

Anyway, the average length of the fibres is preferably shorter than the length of the whole flexible hose 1. It may be even shorter than one circumference C of the hose 1 (which means shorter than n times diameter). It is useful, from a standpoint of manufacture, to cut the fibres to a length shorter than the diameter of the tube.

The fibres are preferably made of glass. Alternatively the fibres may be made of carbon or a synthetic material, for example polyamide or aramide. Even a combination of fibres of different materials may be used.

The fibres are arranged irregularly in different directions as to be taken from figure 4. While some fibres 5 extend mainly in axial direction A some others extend in circumferencial direction or in an inclined direction. The fibres 5 may form a fibrous web filled with the elastomeric material of matrix 4.

The flexible hose 1 may optionally comprise another sheeting for example an outer layer 6 made of any of the before mentioned materials and in particular of chloroprene. The outer sheeting 6 may be bonded to the outer circumferential surface of the elastomeric compound tube 2.

The flexible hose 1 uses the elastomeric compound layer tube 2 for enclosing the fluid within channel 3 and for receiving and absorbing any force caused by the pressurized fluid contained within a channel 3. The fibres 5 replace any braiding or reinforcing use in high pressure hoses known from the art. The flexible hose provides an increased elasticity and durability. The outer sheeting 5, if any, may consist of an elastic material and covers the elastomeric tube.

The manufacture of the inventive flexible hose 1 is simple and reliable. Fibres of one of the materials mentioned above are thoroughly mixed with an uncured synthetic or natural rubber material and extruded through a ring-shaped nozzle for forming the elastomeric tube 2. Additionally, uncured material for forming the sheeting 6 may be applied to the outer surface of the uncured tube member. Curing the element by applying heat or any other curing process will complete the manufacture of the flexible hose 1. The curing process will involve polymerisation and/or vulcanisation of the uncured material for forming the elastomeric matrix 4.

The fibres 5 preferably have diameters of around 1/10 of millimetres or even less. In particular, the diameter of the fibres is less than a 1/10 of the thickness T of the tubular layer.

Another embodiment of an inventive hose 1' is disclosed in figure 2. It discloses the elastomeric tube 2 and the sheeting 6 of figure 1. While the sheeting 6 is optional it includes a sheeting applied internally to the inner circumferential wall of the elastomeric tube 2. Sheetings 6 and 7 are layers from one of the elastomeric materials mentioned above. They may in particular consist of nitrile-butadiene rubber and/or chloroprene and/or any other elastomeric material. The sheetings 6 and 7 may be bonded to the flexible tube 2. It is also possible to prevent direct adherence of the sheetings 7 to the inner surface of the tube member 2 by selecting the internal sheeting 7 from a material which does not bond to the matrix 4. Alternatively, separating materials can be placed at the interface between the innermost layer 7 and the matrix 4.

Figure 3 illustrates another embodiment of an inventive flexible hose 10 comprising two channels 3a and 3b both encircled by an elastomeric matrix 4a. If necessary, additional channels can be provided within the matrix 4a. The inventive method for manufacturing reinforced flexible hoses and the inventive structure form a basis for manufacturing different shapes of flexible hoses comprising several channels. Since no external braiding is to be applied to the tube 2 a very simple manufacturing process can be applied. In particular, there is no problem for introducing braiding between the channels 3a and 3b which might be difficult when using conventional braiding technologies.

A flexible hose which is in particular suited for hydraulic applications comprises at least one compound layer encircling at least one channel. The compound layer consists of a matrix of elastic material and fibres irregularly oriented and embedded therein. No external braiding is necessary for reinforcing the hose to make sure that it withstands high pressures and radial forces.

### Reference Numerals:

- 1, 1', 10: flexible hose
- 2: elastomeric tube
- 3, 3a, 3b: channel
- 4: matrix
- T: thickness of the wall of the tube 2
- 5: fibre
- 6: external sheeting
- 7: internal sheeting

## Claims

1. A flexible hose (1, 1', 10) comprising:
At least one compound layer tube (2) encircling at least one channel (3, 3a, 3b) the compound layer tube consisting of a matrix (4) of elastic material and fibers (5) irregularly oriented and embedded therein.

2. The flexible hose according to claim 1, wherein at least two layers (2, 6, 7) encircling the channel (3) are provided one of them being an innermost layer (2, 7) and the at least one other layer (4, 6) being an intermediate layer or an outer layer.

3. The flexible hose according to claim 1, wherein the at least two layers (2, 6, 7) consist of different materials.

4. The flexible hose according to claim 3, wherein one of the layers consists of an elastomeric material.

5. The flexible hose according to claim 3, wherein the compound layer tube (2) directly borders on the channel (3).

6. The flexible hose according to claim 3, wherein the compound layer tube (2) forms one of the intermediate or outer layers.

7. The flexible hose according to claim 1, wherein the layers (2, 6, 7) are bonded one to another.

8. The flexible hose according to claim 1 or 4, wherein the elastomeric material consists of at least one of the following group: Nitrile butadiene rubber (1,2-butadiene and 1,3-butadiene: NBR), 2-chloro-1,3-butadiene (Chloroprene), ethylene propylene rubber (a copolymer of ethylene and propylene: EPM), Poly Butadiene Rubber (PBR), SBR, EPDM rubber (ethylene propylene diene rubber, a terpolymer of ethylene, propylene and a diene-component: EPDM), FPM, Natural Rubber (NR), Synthetic Polyisoprene (IR), Butyl rubber (copolymer of isobutylene and isoprene, IIR), Halogenated butyl rubbers (Chloro Butyl Rubber: CIIR; Bromo Butyl Rubber: BIIR), Polybutadiene (BR), Styrene-butadiene Rubber (copolymer of polystyrene and polybutadiene, SBR), Nitrile Rubber (copolymer of polybutadiene and acrylonitrile, NBR), Hydrogenated Nitrile Rubbers (HNBR), Therban and Zetpol, Chloroprene Rubber (CR), polychloroprene, Neoprene, Baypren, Epichlorohydrin rubber (ECO), Polyacrylic rubber (ACM, ABR), Silicone rubber (SI, Q, VMQ), Fluorosilicone Rubber (FVMQ), Fluoroelastomers (FKM, and FEPM) Viton, Tecnoflon, Fluorel, Aflas and Dai-El, Perfluoroelastomers (FFKM) Tecnoflon PFR, Kalrez, Chemraz, Perlast, Polyether Block Amides (PEBA), Chlorosulfonated Polyethylene (CSM), (Hypalon), Ethylene-vinyl acetate (EVA), Thermoplastic elastomers (TPE), Thermoplastic Vulcanizates (TPV), Thermoplastic Polyurethane (TPU), Thermoplastic Olefins (TPO).

9. The flexible hose according to claim 1, wherein the fibres are at least one of glass fibres, ceramic fibres, carbon fibres, synthetic fibres and a mixture thereof.

10. The flexible hose according to claim 1, wherein the fibres (5) have an averaged length of less than the circumference of the compound layer tube (2) the fibres (5) are embedded in.

11. The flexible hose according to claim 1, wherein the fibres (5) have an averaged length of less than the diameter of the compound layer tube (2).

12. Method for forming a flexible hose (1, 1', 10), comprising the steps of:
Mixing fibres (5) and an uncured matrix material,
Extruding the mixture of uncured matrix material with the fibres (5) therein for forming a hose structure, and
Curing the mixture of uncured matrix (4) material and the fibres (5) for forming the elastic matrix (4) of a compound layer tube (2).

13. Method according to claim 12, wherein during the step of extruding, the mixture is applied to the outer surface of a preformed hose member (7).

14. Method according to claim 12, wherein a further layer (6) of material is applied to the outer surface of the compound layer tube (2).

15. Method according to claim 12, wherein all layers (2, 6, 7) are subjected to the curing process.
